(19) **Europäisches Patentamt**
**European Patent Office**
**Office européen des brevets**

(11) **EP 2 273 756 B1**

(12) **EUROPEAN PATENT SPECIFICATION**

(45) Date of publication and mention
of the grant of the patent:
**07.06.2017 Bulletin 2017/23**

(21) Application number: **09745390.6**

(22) Date of filing: **24.04.2009**

(51) Int Cl.:
*H04L 29/06* (2006.01)     *H04L 29/08* (2006.01)
*H04L 12/18* (2006.01)     *H04L 12/58* (2006.01)

(86) International application number:
**PCT/CN2009/071455**

(87) International publication number:
**WO 2009/138006 (19.11.2009 Gazette 2009/47)**

(54) **METHOD AND SYSTEM FOR MEDIA PLAYING CONTROL AND METADATA EXECUTION UNIT**

VERFAHREN UND SYSTEM FÜR MEDIENABSPIELSTEUERUNG UND
METADATENAUSFÜHRUNGSEINHEIT

PROCÉDÉ ET SYSTÈME DE COMMANDE DE LECTURE DE MÉDIAS ET UNITÉ D EXÉCUTION
DE MÉTADONNÉES

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **16.05.2008 CN 200810111878
12.09.2008 CN 200810212087**

(43) Date of publication of application:
**12.01.2011 Bulletin 2011/02**

(73) Proprietor: **Huawei Technologies Co., Ltd.
Longgang District
Shenzhen, Guangdong 518129 (CN)**

(72) Inventors:
• **ZHANG, Ni
Longgang District
Shenzhen 518129 (CN)**
• **ZHANG, Dewen
Longgang District
Shenzhen 518129 (CN)**

• **SHI, Youzhu
Longgang District
Shenzhen 518129 (CN)**
• **QI, Baojian
Longgang District
Shenzhen 518129 (CN)**

(74) Representative: **Pfenning, Meinig & Partner mbB
Patent- und Rechtsanwälte
Theresienhöhe 11a
80339 München (DE)**

(56) References cited:
WO-A1-2005/064891     CN-A- 1 538 707
CN-A- 1 859 526     CN-A- 101 087 403
US-A1- 2008 077 620     US-A1- 2008 112 405

• **"Telecommunications and Internet converged
Services and Protocols for Advanced Networking
(TISPAN); IPTV Architecture; IPTV functions
supported by the IMS subsystem; ETSI TS 182
027", IEEE, LIS, SOPHIA ANTIPOLIS CEDEX,
FRANCE, vol. TISPAN, no. V2.0.0, 1 February 2008
(2008-02-01), XP014040791, ISSN: 0000-0001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The present invention relates to the field of communications technology, and more particularly to a method and system for controlling media playing and a metadata execution unit.

**BACKGROUND OF THE INVENTION**

The Internet Protocol television (IPTV) is a manageable multimedia service which transports television, videos, texts, pictures, and data on an IP network with quality of service/quality of experience assurance, security, interactivity, and reliability. A user can enjoy an IPTV service by using a personal computer or by using a set top box (STB) and a common television set at home, or enjoy the IPTV service with a mobile terminal. The IPTV, which delivers unicast, broadcast, or multicast video programs by means of IP packets, is drawing more and more attention from telecommunication operators. Currently, a standardization body of the Telecommunications and Internet Converged Services and Protocols for Advanced Networking (TISPAN) of the European Telecommunications Standards Institute (ETSI), is carrying out research on an IPTV based on an IP multimedia subsystem (IMS) network.

The IPTV system not only provides basic services such as a broadcast (BC) service, a video on demand (VOD) service, and a personal video recorder (PVR) service, but also provides various enhanced services such as a pay per view (PPV) service, a recommending service, an advertising service, a caller identification (caller ID) service, a presence service, a preview service, a bookmarking service, an interactive TV (iTV) service, a consumer originated video (COV) service, and a parental control service. For detailed definitions of the services, please refer to documents published by standardization bodies such as the Alliance for Telecommunications Industry Solutions (ATIS) and the TISPAN.

For example, for VOD program preview in the IPTV services, that is, watching content segments of a normal VOD program such as VOD highlight, VOD program trailers, the user-specified media contents shall be played for users according to a policy preset by a network. Taking the preview of a VOD program trailer as an example, the network plays the media content within a time period of the normal VOD program for a user according to a preset policy. Taking the parental control service as another example, when a view request of a child is received, the network executes a parental control policy, and determines whether the child is allowed to watch a program according to the metadata of the program. In the two examples, both the preset trailer play policy and the parental control play policy are directly controlled by a service control function (SCF) unit; and the policies are executed in a centralized mode. Therefore, execution efficiency is low.

ETSI TS 182 027 V2.0.0 (2008-02) relates to the architecture and functions of an IPTV system that makes use of the NGN IMS architecture and it features. Particularly, it relates to the SCF forwards a session initiation request to a selected MF.

**SUMMARY OF THE INVENTION**

In an embodiment, the present invention provides a method and system for controlling media playing, and a metadata execution unit.

In an embodiment, the present invention provides a method for controlling media playing. The method includes the following steps:

A metadata execution unit receives trigger information for executing metadata, obtains metadata from a metadata providing unit, and executes corresponding metadata according to the trigger information for executing metadata.

The metadata execution unit generates media content control indication information according to an execution result of the executing the corresponding metadata.

The metadata execution unit sends the media content control indication information to a media content control unit, to instruct the media content control unit to control media content playing according to the media content control indication information;

wherein the metadata execution unit is set in a terminal, a media function ,MF, unit or a service control function ,SCF, unit.

In an embodiment, the present invention further provides a metadata execution unit. The unit includes:

a receiving module, configured to receive trigger information for executing metadata, and obtain metadata from a metadata providing unit;

an execution module, configured to execute corresponding metadata according to the received trigger information for executing metadata;

a generation module, configured to generate media content control indication information according to an execution result of the executing the corresponding metadata; and

a sending module, configured to send the media content control indication information to a media content control unit;

wherein the metadata execution unit is set in a terminal, a media function ,MF, unit or a service control function , SCF, unit.

In an embodiment, the present invention further provides a system for controlling media playing. The system includes:

a metadata providing unit, configured to provide metadata;

a metadata execution unit, configured to receive trigger information for executing metadata, obtain metadata from the metadata providing unit, execute corresponding metadata according to the trigger information, generate media content control indication information according to an execution result, and send the media content control indication information; and

a media content control unit, configured to receive the media content control indication information sent by the metadata execution unit, and control media content playing according to the media content control indication information;

wherein the metadata execution unit is set in a terminal, an MF unit or an SCF unit.

As shown in the preceding technical solution, the method and system for controlling media playing and the metadata execution unit according to the embodiments of the present invention provide a method for controlling media playing, in which metadata that contains media content play control of a program/channel is used to describe a play control policy, and is distributed to a specified network entity for execution, so as to control media playing. In this way, the limit that a service control function unit controls the media playing directly is lifted. Therefore, processing efficiency is improved.

Hereinafter, specific embodiments of the present invention are further described in detail with reference to the accompanying drawings.

## BRIEF DESCRIPTION OF THE DRAWINGS

FIG. 1 is a schematic structural view of a system for controlling media playing according to an embodiment of the present invention;

FIG. 2 is a schematic flow chart of a method for controlling media playing according to Embodiment 1 of the present invention;

FIG. 3 is a schematic flow chart of a method for controlling media playing according to Embodiment 2 of the present invention;

FIG. 4 is a schematic view of a signaling process of a method for controlling media playing according to Embodiment 3 of the present invention;

FIG. 5 is a schematic view of a signaling process of a method for controlling media playing according to Embodiment 4 of the present invention;

FIG. 6 is a schematic view of a signaling process of a method for controlling media playing according to Embodiment 5 of the present invention;

FIG. 7 is a schematic view of a signaling process of a method for controlling media playing according to Embodiment 6 of the present invention;

FIG. 8 is a schematic view of a signaling process of a method for controlling media playing according to Embodiment 7 of the present invention;

FIG. 9 is a schematic view of a signaling process of a method for controlling media playing according to Embodiment 8 of the present invention; and

FIG. 10 is a schematic structural view of a metadata execution unit according to an embodiment of the present invention.

## DETAILED DESCRIPTION OF THE EMBODIMENTS

In the embodiments, the present invention discloses a method and an apparatus for controlling media playing in an Internet Protocol television (IPTV) system according to metadata, so as to solve problems of centralized execution of policies and low efficiency of the prior art in which the play control mode is direct control by a service control function (SCF). The adopted scheme includes using metadata to describe a play control policy, and delivering the metadata to a specified network entity for execution to control media playing. In this way, decentralized execution of the policy is achieved. Therefore, processing efficiency is improved. The metadata is information about media content play control of a program/channel in the IPTV system, such as time information of preview segments, or information about whether a user is allowed to watch certain channels or programs. The metadata to be executed by a metadata execution unit is combined into information, namely, metadata, so that the metadata is provided to the metadata execution unit.

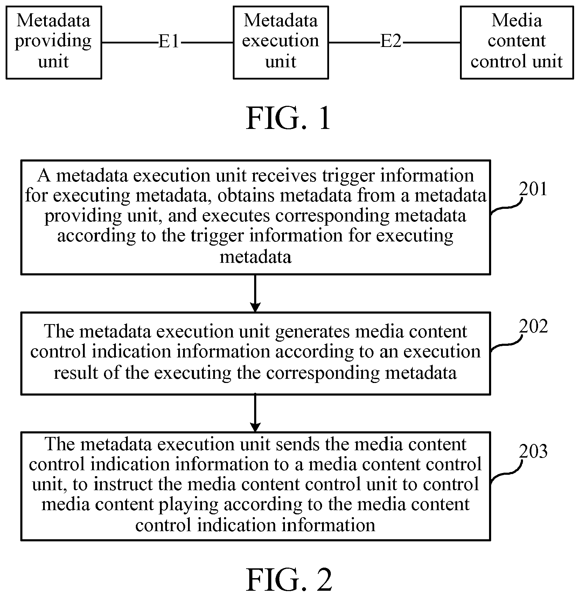

FIG. 1 is a schematic structural view of a system for controlling media playing according to an embodiment of the present invention. The system includes a metadata providing unit 1, a metadata execution unit 2, and a media content control unit 3. The metadata providing unit 1 is configured to provide metadata. The metadata execution unit 2 is configured to receive trigger information for executing metadata, obtain metadata from the metadata providing unit 1, execute corresponding metadata according to the trigger information for executing metadata, generate media content control indication information according to an execution result, and send the media content control indication information. The media content control unit 3 is configured to receive the media content control indication information sent by the metadata execution unit 2, and correspondingly control media content playing according to the media content control indication information. The metadata providing unit 1 may be set in a service selection function (SSF) unit, a user profile server function (UPSF) unit, a media function (MF) unit, an SCF unit or an elementary control function/elementary forwarding function (ECF/EFF) unit. The metadata execution unit 2 may be set in an IPTV terminal, an MF unit or an SCF unit. The media content control unit 3 may be set in an IPTV terminal, an SCF unit, an MF unit or an ECF/EFF unit. As shown in FIG. 1, an interface E1 between the metadata providing unit 1 and the metadata execution unit 2 may be an internal interface (when the metadata providing unit 1 and the metadata execution unit 2 are set in the same function entity), a Hypertext Transfer Protocol (HTTP) interface, a Session Initiation Protocol (SIP) interface, a Diameter Protocol interface, a Real-Time Streaming Protocol (RTSP) interface, an Internet Group Multicast Protocol (IGMP) interface or a Real-Time Transport Protocol (RTP)/Real-Time Transport Control Protocol (RTCP) interface. An interface E2 between the metadata execution unit 2 and the media content control unit 3 may be an internal interface, an SIP interface or an RTSP interface.

The metadata may be an executable application logic described in a form such as data or Extensible Markup Language (XML).

As shown in the system for controlling media playing according to the embodiment, metadata is used to describe a play control policy, a metadata execution unit, which may be set in different function units, is configured to execute the policy, and each unit is distributed to a different function unit to perform the execution. In this way, decentralized execution of the policy is achieved. Therefore, processing efficiency is improved.

Based on the logical architecture of the system for controlling media playing in the foregoing embodiment, FIG. 2 is a schematic flow chart of a method for controlling media playing according to Embodiment 1 of the present invention. The method includes the following steps:

In step 201, a metadata execution unit receives trigger information for executing metadata, obtains metadata from a metadata providing unit, and executes corresponding metadata according to the trigger information for executing metadata.

In step 202, the metadata execution unit generates media content control indication information according to an execution result of the executing the corresponding metadata.

In step 203, the metadata execution unit sends the media content control indication information to a media content control unit, to instruct the media content control unit to control media content playing according to the media content control indication information.

When receiving trigger information for executing metadata from outside, a metadata execution unit executes corresponding metadata according to the trigger information for executing metadata. After executing the corresponding metadata, the metadata execution unit generates media content control indication information according to an execution result, and sends the media content control indication information to a media content control unit, so as to enable the media content control unit to control media content playing.

According to the method for controlling media playing provided in the embodiment, media play control is performed through the foregoing steps achieves decentralized execution of the policy. Therefore, processing efficiency is improved.

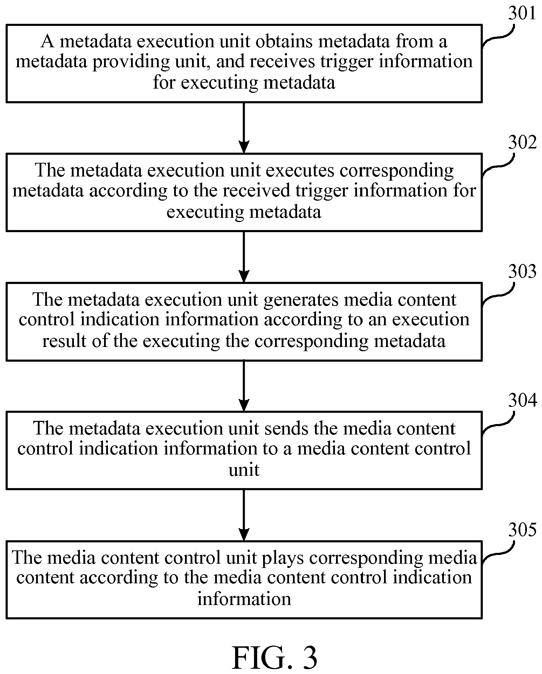

FIG. 3 is a schematic flow chart of a method for controlling media playing according to Embodiment 2 of the present invention. The method includes the following steps:

In step 301, a metadata execution unit obtains metadata from a metadata providing unit, and receives trigger information for executing metadata.

In step 302, the metadata execution unit executes corresponding metadata according to the trigger information for executing metadata.

When receiving the trigger information for executing metadata from outside, the metadata execution unit executes the corresponding metadata according to the trigger information for executing metadata. The trigger information for executing metadata may be explicit trigger information or implicit trigger information. The trigger information may be a user operation event, for example, an event that a user clicks a preview button, where the event triggers the execution of metadata of a corresponding segment; or event information or a standard SIP message, for example, an SIP invite message, where the message triggers the execution of metadata of a corresponding segment when it is determined that the user has no right to watch a program, and the trigger information is implicit trigger information. The rigger information may be also request information for watching a program that carries a preview indication. For such information as request information, it is not necessary to determine whether a user has the right to watch a program, and the trigger information is explicit trigger information.

The corresponding executed metadata is information that is about media content play control of a program/channel and is obtained by the metadata execution unit from the metadata providing unit. The metadata may be obtained before or after the trigger information for executing metadata is received. The metadata providing unit may actively push the metadata to the metadata execution unit or the metadata execution unit may actively request the metadata from the metadata providing unit, and then obtain the metadata. The obtaining approaches include, but not limited to, obtaining from electronic program guides (EPG) (that is, the metadata execution unit actively requests the EPG from the metadata providing unit before the trigger information for executing metadata is received, and obtains the metadata from the EPG), obtaining from a media stream in real time, obtaining from responses to program play requests, that is, SIP invite request, obtaining from responses to RTSP describe commands, obtaining form information input by a user, obtaining from an SSF, or obtaining from an SCF.

The metadata that contains media content play control and is provided by the metadata providing unit to the metadata execution unit is preset by a user in the metadata providing unit, or automatically generated in some situations, for example, when request information that the metadata execution unit actively requests the metadata from the metadata providing unit is received. The metadata is specified by a network side, generated according to a network policy, or generated according to a user-defined condition. The media content play control includes whether a user is allowed to watch a segment, and which segments the user is allowed to preview. For example, if a network side specifies that a user is allowed to preview segments of 5s to 25s and 50s to 80s, the metadata of preview segment is from 5s to 25s and from 60s to 80s. In another example, if a parent defines that a child is not allowed to watch programs above Level 4, a network generates the metadata about whether a user is allowed to watch the metadata according to the parental settings and level information of the program, that is, ParCon=true or false.

In step 303, the metadata execution unit generates media content control indication information according to an execution result of the executing the corresponding metadata.

The metadata execution unit invokes an internal logic to execute the obtained metadata according to the trigger information for executing metadata from outside. For example, if a user clicks a video on demand (VOD) program preview button, metadata of a preview segment of the program is executed, and an execution result indicates that the user is allowed to watch media content of segments from 5s to 25s and from 50s to 80s of the program. In another example, if a child clicks to watch a program, parental control (ParCon) metadata of the program is executed, and an execution result indicates that the child is allowed to watch the program.

After the metadata is executed, the metadata execution unit generates media content control indication information according to an execution result, and sends the media content control indication information to a media content control unit. The media content control indication information carries a media content indication and a control indication. The media content indication is used to indicate a media content object to be controlled; and the media content indication may be a media content identifier, such as an RTSP universal resource identifier (URI) rtsp://audio.example.com/twister/audio.en defined in the RTSP, or a program/channel identifier such as a content reference identifier (CRID) or a URI, and also a multicast address. The media content control indication is used to indicate a playing operation to be performed on the media content, such as, playing media content in a specified time period, joining or leaving a multicast group, and playing or stopping playing a specified program.

For example, if the execution result indicates that the user is allowed to watch the media content of time periods from 5s to 25s and from 50s to 80s of the program, the media content control indication information generated by the metadata execution unit according to the resulting result is RTSP Play Range npt=5-25;npt=50-80. In another example, if the above execution result indicates that the child is allowed to watch the program, the media content control indication information generated is IGMP join.

In step 304, the metadata execution unit sends the media content control indication information to a media content control unit.

In step 305, the media content control unit plays corresponding media content according to the media content control indication information.

The media content control unit correspondingly controls media content playing according to the media content control indication information sent by the metadata execution unit. The media play control includes whether a user is allowed to watch a program, which segments the user is allowed to preview, and other similar information. The metadata to be played is the metadata either specified by a network side, or generated according to a network policy, or generated according to a user-defined condition.

The media content in the time periods from 5s to 25s and from 50s to 80s sent to a user, or the media content of the program sent to a child is played.

According to the method for controlling media playing provided in the embodiment, the metadata which include media content play control of a program/channel is used to describe a play control policy, and is distributed to each unit and executed therein, which realizes decentralized execution of the policy, thus improving processing efficiency.

Hereinafter, a method for controlling media playing by setting the foregoing metadata providing unit, the metadata execution unit, and the media content control unit in various function entities is described in specific examples.

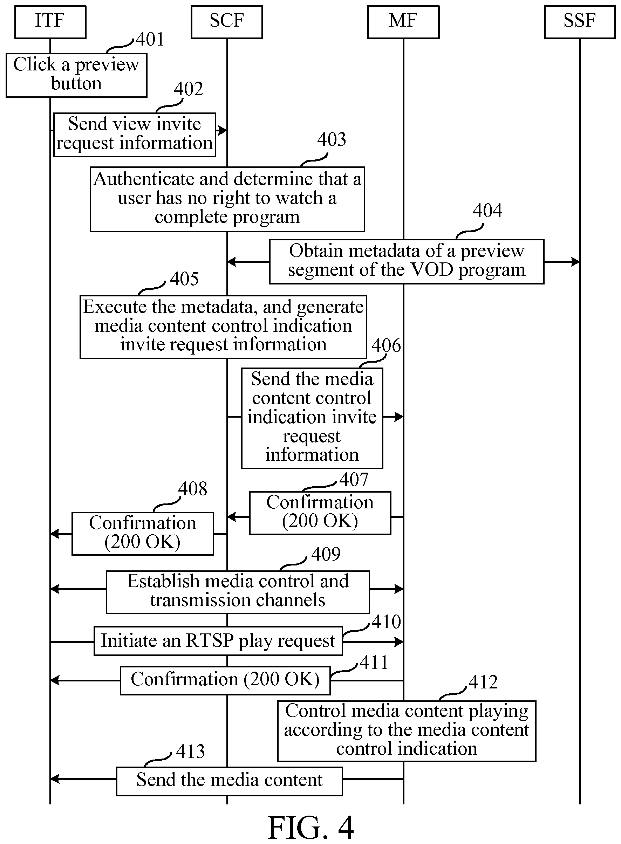

FIG. 4 is a schematic view of a signaling process of a method for controlling media playing according to Embodiment 3 of the present invention. In the embodiment, a user clicks a preview button presented on a man-machine interface on an IPTV terminal function (ITF) of an IPTV terminal, so as to initiate preview of a VOD program to a network. The SCF is a metadata execution unit, the MF is a media content control unit, and the SSF is a metadata providing unit.

In step 401, a user decides to preview a pay VOD program, and clicks a corresponding preview button.

In step 402, the ITF sends a view invite request to the SCF.

The view invite request here is implicit trigger information, that is, no metadata to be executed is obviously specified. In the embodiment, it is requested to watch a program in step 402 and authentication in step 403 is needed to learn whether the user has a right to watch a complete program.

In step 403, the SCF authenticates the user, and determines that the user has not paid and has no right to watch the complete program.

In step 404, the SCF obtains metadata of a preview segment of the VOD program from the SSF, in which the metadata is information preset by a network in the SSF, or obtained by the SSF from other metadata storage entities.

Because it is not explicitly specified that metadata of a preview segment is to be executed in the view invite request in step 402, the user needs to be authenticated in step 403. When the user's right is limited, that is, the user has no right to watch the complete program, the execution of the metadata of the preview segment of the VOD program is triggered.

In step 405, the SCF executes the metadata. The execution result of executing the metadata instructs the MF to play the media content of the preview segment for the user within a specified time period, and generates a media content control indication invite request which carries a media content indication and a control indication.

Take Preview Segment=5-30, 60-80 as an example, after the SCF executes preview segment data, a media content indication, namely, a VOD program identifier, is carried in an invite request URI of the invite request; and a media control indication, namely, range npt=5-30;npt=60-80, is carried in a Session Describe Protocol (SDP) description.

In step 406, the SCF sends the media content control indication invite request to the MF.

In step 407, the MF receives the invite request, and returns a confirmation (200 OK).

In step 408, the SCF returns the 200 OK to the ITF.

In step 409, media control and transmission channels are established between the ITF and the MF after session negotiation.

In step 410, the ITF sends an RTSP play request to the MF.

In step 411, the MF receives the play request, and returns a confirmation 200 OK.

In step 412, the MF controls media content playing according to the media content control indication information carried in the invite request sent by the SCF, for example, sends media content within time periods from 5s to 30s and from 60s to 80s according to a media content control indication "range npt=5-30;npt=60-80".

In step 413, the MF sends media content within time periods from 5s to 30s and from 60s to 80s.

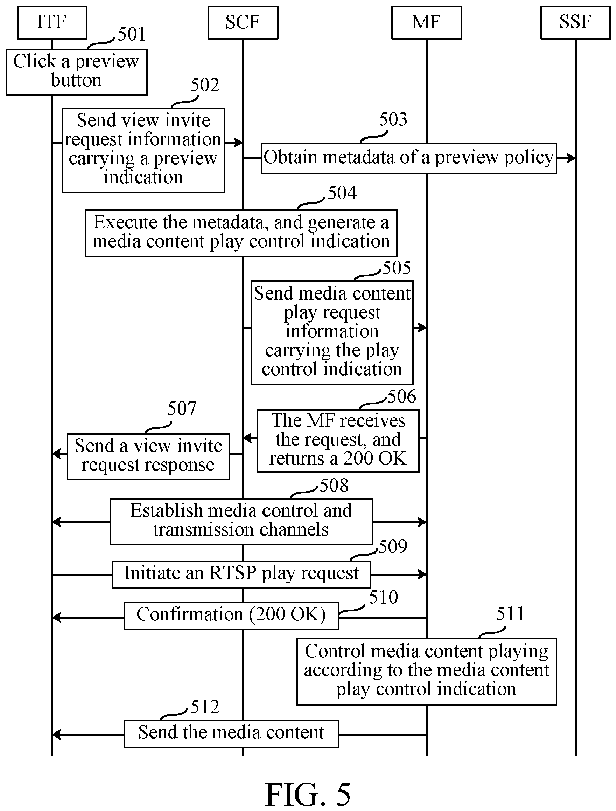

FIG. 5 is a schematic view of a signaling process of a method for controlling media playing according to Embodiment 4 of the present invention. In the embodiment, a user directly requests to preview VOD content, and sends a preview request to an SCF. In this embodiment, the same as that in Embodiment 3, the SCF is a metadata execution unit, the MF is a media content control unit, and the SSF is a metadata providing unit. A difference from Embodiment 3 is that a step that the SCF authenticates whether the user has a right to watch a complete program is not necessary in this embodiment.

In step 501, a user decides to preview a pay VOD program, and clicks a corresponding preview button.

In step 502, an ITF sends a view invite request to the SCF, which also carries a preview indication in addition to an ID of the content to be viewed.

The view invite request in step 502 is explicit trigger information, which carries obvious preview indication that can obviously indicate corresponding metadata to be executed, which is a preview indication of a program content to indicate to correspondingly execute the metadata of the preview segment.

The preview indication here includes, but not limited to, the following modes.

1) The preview indication may be an a-property line added to an SDP message body carried in an SIP message, such as: a=preview.

2) The preview indication may be a parameter that represents preview added in an SIP request URI that carries the content ID, such as:

INVITE yingxiong@cctv.com;mode=preview.

3) The preview indication may also be a preview indication carried in a message body in an XML mode, such as a message body of a type of "application/etsi-iptvcommand+xml" as follows carried in an SIP invite message:

Content-Type = application/etsi-iptvcommand +xml

```
<?xml version="1.0" encoding="UTF-8"?>
<IPTVActionDataCommand>
    Preview
</IPTVActionDataCommand>.
```

In step 503, the SCF identifies the preview indication in the view invite request, obtains metadata of a preview segment of the VOD program from the SSF, in which the metadata is information preset by a network in the SSF, or obtained by the SSF from other metadata storage entities.

Because the preview indication is carried in the view invite request, that is, it is clear that the user wants to obtain metadata of a preview segment, that is, a step of authenticating whether the user has a right to watch a complete program in step 403 in the previous embodiment is not necessary.

In step 504, the SCF executes the metadata. The execution result of executing the metadata instructs the MF to play a specified media content of the preview segment for the user, and generates a media content control indication invite request which carries media content control indication.

The media content control indication may be carried in an SDP message body of the invite request sent by the SCF to the MF, for example, adding an a-property line of the SDP:

a=range npt=5-30;npt=60-80;

In step 505, the SCF sends the media content control indication invite request to the MF.

In step 506, the MF receives the invite request, and returns a confirmation (200 OK).

In step 507, the SCF returns the confirmation 200 OK to the ITF.

In step 508, a media transmission channel and a media control channel are established between the ITF and the MF after session negotiation.

For example, the media transmission channel is an RTP channel, and the media control channel is an RTSP channel. It may be necessary for the ITF to send an RTSP SETUP request for establishing a specific RTSP channel.

In step 509, the ITF sends an RTSP play request to the MF.

In step 510, the MF receives a play request, and returns a confirmation 200 OK.

In step 511, the MF controls media content playing according to the media content control indication carried in the invite request sent by the SCF, for example, sends media content within time periods from 5s to 30s and from 60s to 80s for the user according to a media content control indication a=range npt=5-30;npt=60-80.

In step 512, the MF sends corresponding media content according to the media content control indication.

For example, media content within time periods from 5s to 30s and from 60s to 80s.

Moreover, in the foregoing two embodiments, the MF unit may include both the metadata execution unit and the media content control unit. For example, in steps 503 and 504, the SCF does not obtain metadata of a preview segment, and the media content control indication is not carried in the invite request sent to the MF, but the preview indication in step 502 is still carried. In step 506, after receiving the invite request, the MF obtains the metadata of the preview segment from the SSF according to the preview indication in the information, and generates a media content control indication according to the metadata of the preview segment.

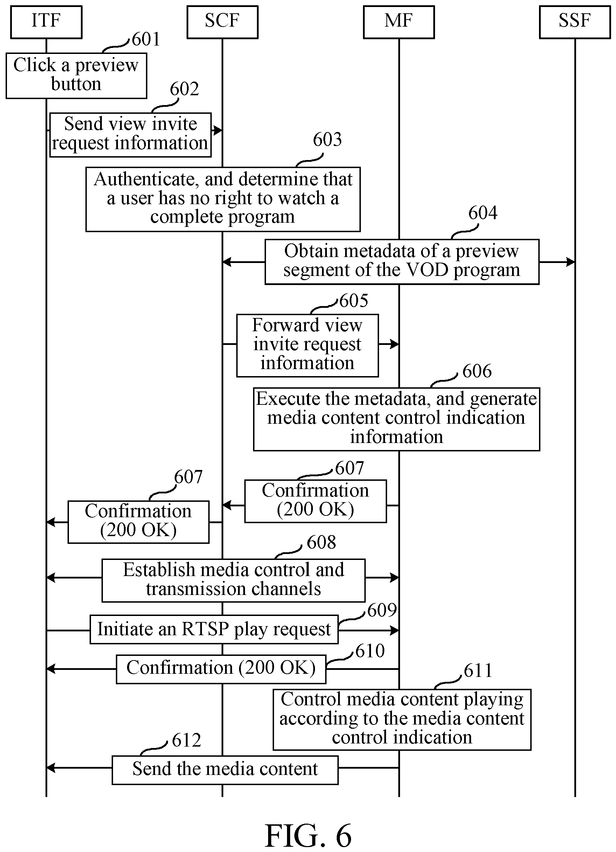

FIG. 6 is a schematic view of a signaling process of a method for controlling media playing according to Embodiment 5 of the present invention. The MF unit includes both a metadata execution unit and a media content control unit. The method includes the following steps.

In step 601, a user decides to preview a pay VOD program, and clicks a corresponding preview button.

In step 602, an ITF sends a view invite request to an SCF.

In step 603, the SCF authenticates the user and determines that the user has not paid and has no right to watch a complete program.

In step 604, the SCF obtains metadata of a preview segment of the VOD program from the SSF, in which the metadata is information preset by a network in the SSF, or obtained by the SSF from other metadata storage entities.

In step 605, the SCF carries the metadata of the preview segment in the view invite request, and sends the view invite request o the MF.

In step 606, the MF executes the metadata of the preview segment carried in the invite request, in which an execution result is to internally indicate to play a media content within a specified time period of the preview segment for the user. The MF generates private media content control indication information inside the MF, where the information carries a media content indication and a control indication.

Taking a Preview Segment=5-30, 60-80 as an example, after executing the metadata of the preview segment, the metadata execution unit in the MF generates media content control indication to play the media content within the range npt=5-30;npt=60-80.

The metadata execution unit in the MF sends the media content control indication information to the media content control unit in the MF through an internal interface.

In step 607, the MF returns a 200 OK to the ITF.

In step 608, a media control channel and a transmission channel are established between the ITF and the MF after session negotiation.

In step 609, the ITF sends an RTSP play request to the MF.

In step 610, the MF receives the play request, and returns a 200 OK.

In step 611, the MF controls media content playing according to the media content control indication carried in the received indication information, for example, sends media content within time periods from 5s to 30s and from 60s to 80s according to the media content control indication range npt=5-30;npt=60-80.

In step 612, the MF sends media content within time periods from 5s to 30s and from 60s to 80s to the ITF.

In an embodiment according to the present invention, it may be that a terminal ITF is a metadata execution unit, an MF is a media content control unit, and an SCF is a metadata providing unit.

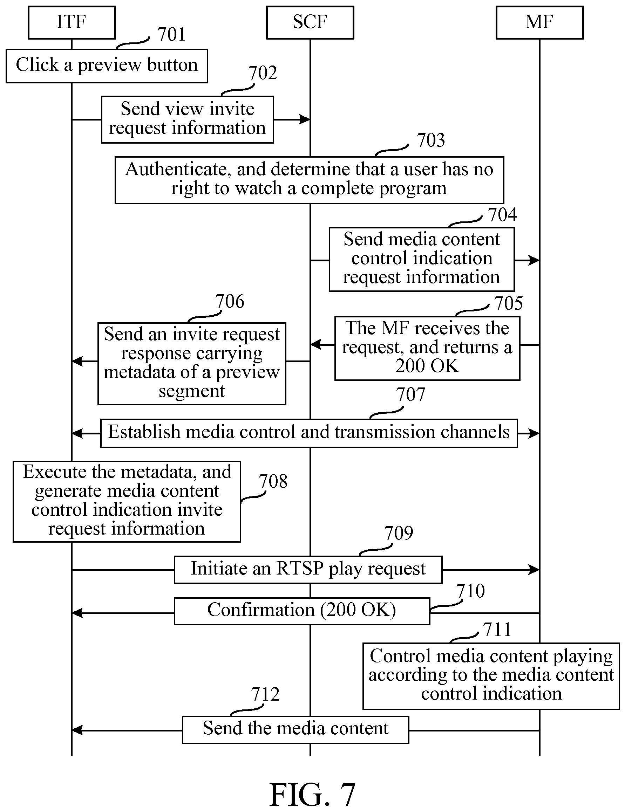

FIG. 7 is a schematic view of a signaling process of a method for controlling media playing according to Embodiment 6 of the present invention. A terminal ITF is a metadata execution unit, an MF is a media content control unit, and an SCF is a metadata providing unit. The method includes the following steps.

In step 701, a user decides to preview a pay VOD program, and clicks a corresponding preview button.

In step 702, the ITF sends a view invite request to the SCF.

In step 703, the SCF authenticates the user, and determines that the user has not paid and has no right to watch the complete program.

In step 704, the SCF sends the media content control indication request information to the MF.

In step 705, the MF receives the invite request, and returns a 200 OK.

In step 706, the SCF carries metadata of a preview segment of a VOD program in the response 200 OK to the invite request to return the metadata to the terminal, in which the metadata is information preset by a network in the SCF, or obtained by the SCF from other metadata storage entities.

In step 707, media control and transmission channels are established between the ITF and the MF after session negotiation.

In step 708, the ITF executes the metadata. The execution result of executing the metadata instructs the MF to play a media content within a specified time period of the preview segment for the user; and the ITF generates media content control indication information which carries a media content indication and a control indication.

Taking Preview Segment=5-30, 60-80 as an example, after executing the preview segment data, the ITF carries a media content indication, namely, VOD media internal identifier information, and a media control indication, namely range npt=5-30;npt=60-80, in a request URI of an RTSP Play.

In step 709, the ITF sends an RTSP play request to the MF, which carries the media control indication, namely, range npt=5-30;npt=60-80.

In step 710, the MF receives the play request, and returns a 200 OK.

In step 711, the MF controls media content playing according to the media content control indication carried in the received play request, for example, sends media content within time periods from 5s to 30s and from 60s to 80s according to the media content control indication range npt=5-30;npt=60-80.

In step 712, the MF sends media content within time periods from 5s to 30s and from 60s to 80s.

In addition, if a terminal ITF is used as a media content control unit, an SCF is a metadata execution unit, and an SSF is a metadata providing unit, the ITF receives media content control indication information generated by the SCF, and carries the media content control indication information in a play request, so as to control media content playing.

In an embodiment according to the present invention, a metadata providing unit can be set in any other function unit in addition to an SCF and an SSF as long as a metadata execution unit can obtain the metadata from the function unit.

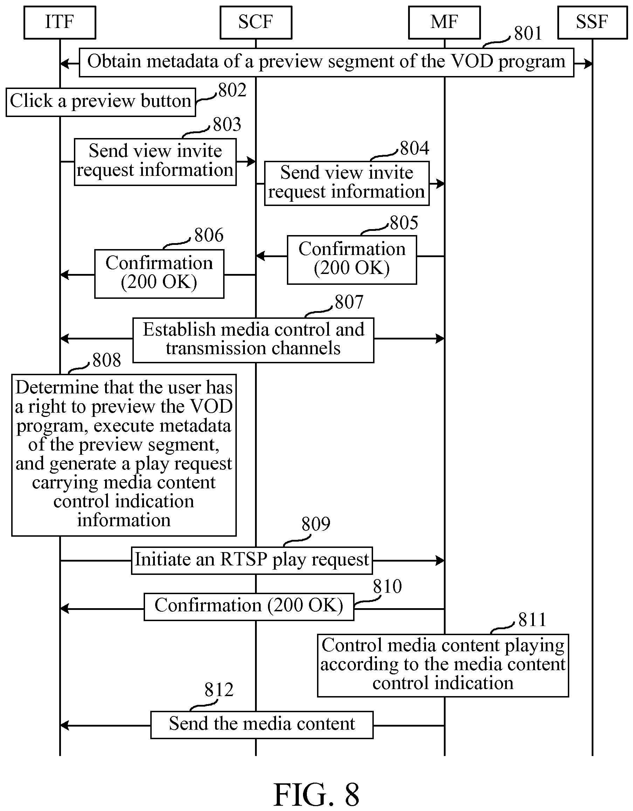

FIG. 8 is a schematic view of a signaling process of a method for controlling media playing according to Embodiment 7 of the present invention. In the embodiment, a user clicks a preview button presented on a man-machine interface on an IPTV terminal function (ITF), so as to initiate preview of a VOD program to a network, in which the ITF is a metadata execution unit, an MF is a media content control unit, and an SSF is a metadata providing unit.

In step 801, the ITF obtains EPG information from the SSF, in which the EPG includes metadata of a preview segment of a VOD program, and the metadata is information preset by a network in the SSF, or obtained by the SSF from other metadata storage entities.

In step 802, a user decides to preview a VOD program, and clicks a corresponding preview button.

In steps 803 to 807, the ITF initiates a program view request, and establishes a media control channel and a transmission channel between the ITF and the MF.

In step 808, the ITF determines that the user has a right to preview the VOD program, and executes the metadata of the preview segment. The execution result of executing the metadata instructs the MF to play the media content within a specified time period of the preview segment for the user. The ITF generates a play request carrying media content control indication information which carries a media content indication and a control indication.

Taking Preview Segment=5-30, 60-80 as an example, after executing the preview segment data, the ITF carries a media content indication, namely, a VOD media URI, and a media control indication, namely, range npt=5-30;npt=60-80, in a request URI of the play request.

In step 809, the ITF sends an RTSP play request to the MF. The RTSP play request carries the media control indication, namely, range npt=5-30;npt=60-80.

In step 810, the MF receives the play request, and returns a 200 OK.

In step 811, the MF controls media content playing according to the media content control indication carried in the play request, for example, sends media content within time periods from 5s to 30s and from 60s to 80s according to the media content control indication range npt=5-30;npt=60-80.

In step 812, the MF sends media content within the time periods from 5s to 30s and 60s to 80s.

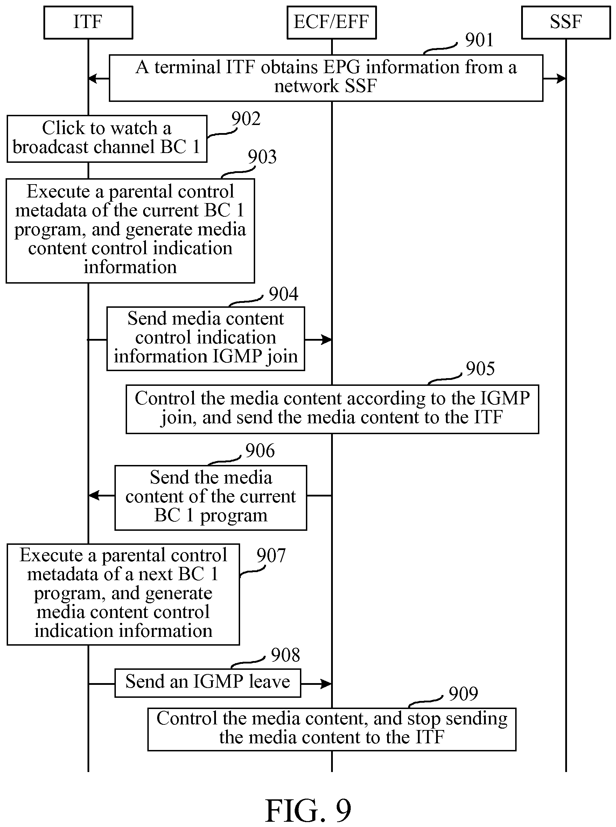

FIG. 9 is a schematic view of a signaling process of a method for controlling media playing according to Embodiment 8 of the present invention. In this embodiment, a child is watching a broadcast channel 1 (BC 1), in which an ITF is a metadata execution unit, an ECF/EFF is a media content control unit, and an SSF is a metadata providing unit.

In step 901, a child terminal ITF obtains EPG information from the network SSF, in which the metadata of each program of the EPG includes parental control information set by a network, such as the SSF, according to parents (such as that the child is allowed to watch programs below Level 4), and parental control information generated by information of a program (such as the level). For example, in BC 1, parental control metadata for 18:00-19:00 Haier Brothers is not limited, that is, the child is allowed to watch the program, while parental control metadata for 19:00-20:00 Brave the Journey to the Northeast is limited, that is, the child is not allowed to watch the program.

In step 902, the child clicks to watch the BC 1 at 18:05.

In step 903, the ITF executes the parental control metadata of the current program Haier Brothers of the BC 1, in which an execution result indicates that the child is allowed to watch the program, and generates media content control indication information, namely IGMP join, which carries a media content indication multicast address of the BC 1 and a media control indication join.

In step 904, the ITF sends the media content control indication information IGMP join to the ECF/EFF.

In step 905, the ECF/EFF controls the media content according to the IGMP join, and sends the media content to the ITF.

In step 906, the ECF/EFF sends current media content of the BC 1 to the ITF.

In step 907, after the Haier Brothers is finished, the ITF executes the parental control metadata of the next program Brave the Journey to the Northeast of the BC 1, in which an execution result indicates that the child is not allowed to watch the program, and generates media content control indication information, namely IGMP leave, which carries a media content indication multicast address of the BC 1 and a media control indication leave.

In step 908, the ITF sends the IGMP leave to the ECF/EFF.

In step 909, the ECF/EFF controls the media content according to the IGMP leave, and stops sending media content to the ITF.

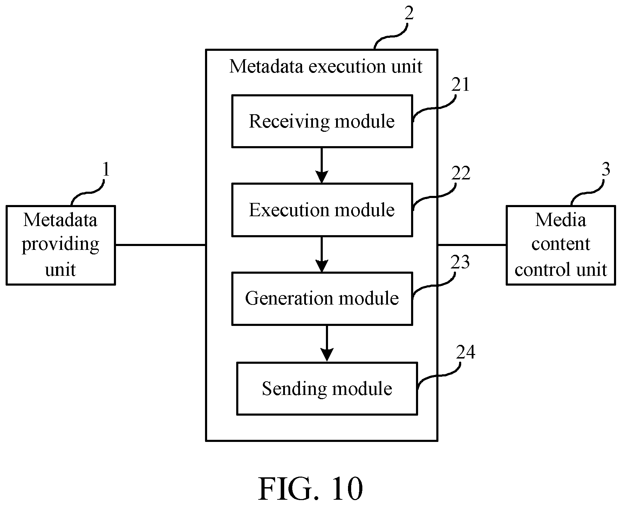

FIG. 10 is a schematic structural view of a metadata execution unit according to an embodiment of the present invention. The metadata execution unit 2 includes a receiving module 21, an execution module 22, a generating module 23, and a sending module 24. The receiving module 21 is configured to receive trigger information for executing metadata, and obtain metadata from a metadata providing unit. The execution module 22 is configured to execute corresponding metadata according to the received trigger information for executing metadata, in which the metadata is obtained from a metadata providing unit 1. The generation module 23 is configured to generate media content control indication information according to an execution result of executing the corresponding metadata by the execution module 22. The sending module 24 is configured to send the media content control indication information generated by the generation module 23 to a media content control unit 3.

It should be noted that the above embodiments are merely provided for elaborating the technical solutions of the present invention, but not intended to limit the present invention. Although the present invention has been described in detail with reference to the foregoing embodiments, it is apparent that those skilled in the art can make various modifications and variations to the invention.

**Claims**

1. A method for controlling media playing, comprising:

   receiving (201), by a metadata execution unit, trigger information for executing metadata, obtaining metadata from a metadata providing unit, and executing corresponding metadata according to the trigger information for executing metadata;
   generating (202), by the metadata execution unit, media content control indication information according to an execution result of the executing the corresponding metadata; and
   sending (203), by the metadata execution unit, the media content control indication information to a media content control unit, to instruct the media content control unit to control media content playing according to the media content control indication information;
   wherein the metadata execution unit is set in a terminal, a media function, MF, unit or a service control function, SCF, unit.

2. The method for controlling media playing according to claim 1, wherein the receiving, by the metadata execution unit, the trigger information for executing metadata, and the obtaining the metadata from the metadata providing unit comprise: first receiving the trigger information for executing metadata, and then obtaining the metadata; or first obtaining the metadata, and then receiving the trigger information for executing metadata.

3. The method for controlling media playing according to claim 1 or 2, wherein the trigger information for executing metadata comprises: explicit trigger information obviously indicating metadata to be obtained or implicit trigger information not obviously indicating metadata to be obtained.

4. The method for controlling media playing according to claim 3, wherein the explicit trigger information is an view invite request, the receiving (201), by a metadata execution unit, trigger information for executing metadata comprises: receiving, by the metadata execution unit, the view invite request from IPTV Terminal Function, ITF, wherein the view invite request carries a preview indication and an ID of the content to be viewed.

5. The method for controlling media playing according to claim 4, wherein the preview indication of a program content is configured to indicate to correspondingly execute the metadata of the preview segment.

6. The method for controlling media playing according to claim 3, wherein the metadata obtained by the metadata execution unit from the metadata providing unit comprises: metadata preset in the metadata providing unit, or metadata generated by the metadata providing unit when metadata request information is received.

7. The method for controlling media playing according to claim 6, wherein the metadata generated when the metadata request information is received comprises: metadata specified by a network side, or metadata generated according to a network policy, or metadata generated according to a user-defined condition.

8. The method for controlling media playing according to claim 1, wherein the metadata providing unit is set in a service selection function ,SSF, unit, a user profile server function ,UPSF, unit, a media function, MF, unit, a service control function ,SCF, unit or an elementary control function/elementary forwarding function, ECF/EFF, unit.

9. The method for controlling media playing according to claim 1, wherein the media content control unit is set in a terminal, a service control function ,SCF, unit, a media function, MF, unit or an elementary control function/elementary forwarding function, ECF/EFF, unit.

10. A metadata execution unit, comprising:

   a receiving module (21), configured to receive trigger information for executing metadata, and obtain metadata from a metadata providing unit;
   an execution module (22), configured to execute corresponding metadata according to the received trigger information for executing metadata;
   a generation module (23), configured to generate media content control indication information according to an execution result of the executing the corresponding metadata; and
   a sending module (24), configured to send the media content control indication information to a media content control unit (3);
   wherein the metadata execution unit is set in a terminal, a media function, MF, unit or a service control function, SCF, unit.

11. A system for controlling media playing, comprising:

   a metadata providing unit (1), configured to provide metadata;
   a metadata execution unit (2), configured to receive trigger information for executing metadata, obtain metadata from the metadata providing unit (1), execute corresponding metadata according to the trigger information, generate media content control indication information according to an execution result, and send the media content control indication information; and
   a media content control unit (3), configured to receive the media content control indication information sent by the metadata execution unit, and control media content playing according to the media content control indication information;
   wherein the metadata execution unit (2) is set in a terminal, an MF unit or an SCF unit.

12. The system for controlling media playing according to claim 11, wherein the metadata providing unit (1) is set in a service selection function ,SSF, unit, a user profile server function ,UPSF, unit, a media function ,MF, unit, a service control function ,SCF, unit or an elementary control function/elementary forwarding function ,ECF/EFF, unit.

13. The system for controlling media playing according to claim 11 or 12, wherein the media content control unit (3) is set in a terminal, an SCF unit, an MF unit or an ECF/EFF unit.

14. The system for controlling media playing according to claim 11, 12 or 13, wherein the metadata obtained from the metadata providing unit comprises: preset metadata or metadata generated when metadata request information is received.

**Patentansprüche**

1. Verfahren zum Steuern des Abspielens von Medien, das Folgendes umfasst:

   Empfangen (201) durch eine Metadatenausführungseinheit von Triggerinformationen zum Ausführen von Metadaten, Erhalten von Metadaten von einer Metadatenbereitstellungseinheit und Ausführen entsprechender Metadaten gemäß den Triggerinformationen zum Ausführen von Metadaten;

Erzeugen (202) durch die Metadatenausführungseinheit von Medieninhaltsteuerungsangabeinformationen gemäß einem Ausführungsergebnis des Ausführens der entsprechenden Metadaten; und

Senden (203) durch die Metadatenausführungseinheit der Medieninhaltsteuerungsangabeinformationen zu einer Medieninhaltssteuereinheit, um die Medieninhaltssteuereinheit anzuweisen, das Abspielen von Medieninhalt gemäß den Medieninhaltsteuerungsangabeinformationen zu steuern;

wobei die Metadatenausführungseinheit in einem Endgerät, einer Medienfunktions-Einheit, MF-Einheit, oder einer Dienststeuerungsfunktions-Einheit, SCF-Einheit, eingestellt ist.

2. Verfahren zum Steuern des Abspielens von Medien nach Anspruch 1, wobei das Empfangen durch die Metadatenausführungseinheit der Triggerinformationen zum Ausführen von Metadaten und das Erhalten der Metadaten von der Metadatenbereitstellungseinheit Folgendes umfassen: zuerst Empfangen der Triggerinformationen zum Ausführen von Metadaten und dann Erhalten der Metadaten; oder zuerst Erhalten der Metadaten und dann Empfangen der Triggerinformationen zum Ausführen von Metadaten.

3. Verfahren zum Steuern des Abspielens von Medien nach Anspruch 1 oder 2, wobei die Triggerinformationen zum Ausführen von Metadaten Folgendes umfassen: explizite Triggerinformationen, die Metadaten, die erhalten werden sollen, offensichtlich angeben, oder implizite Triggerinformationen, die Metadaten, die erhalten werden sollen, nicht offensichtlich angeben.

4. Verfahren zum Steuern des Abspielens von Medien nach Anspruch 3, wobei die expliziten Triggerinformationen eine Betrachtungseinladungsanforderung sind, das Empfangen (201) durch eine Metadatenausführungseinheit von Triggerinformationen zum Ausführen von Metadaten Folgendes umfasst: Empfangen durch die Metadatenausführungseinheit der Betrachtungseinladungsanforderung von der IPTV-Endgerätefunktion, ITF, wobei die Betrachtungseinladungsanforderung eine Vorschauangabe und eine ID des Inhalts, der angesehen werden soll, führt.

5. Verfahren zum Steuern des Abspielens von Medien nach Anspruch 4, wobei die Vorschauangabe eines Programminhalts konfiguriert ist, anzugeben, die Metadaten des Vorschausegments entsprechend auszuführen.

6. Verfahren zum Steuern des Abspielens von Medien nach Anspruch 3, wobei die Metadaten, die durch die Metadatenausführungseinheit von der Metadatenbereitstellungseinheit erhalten werden, Folgendes umfassen: Metadaten, die in der Metadatenbereitstellungseinheit voreingestellt sind, oder Metadaten, die durch die Metadatenbereitstellungseinheit erzeugt werden, wenn Metadatenanforderungsinformationen empfangen werden.

7. Verfahren zum Steuern des Abspielens von Medien nach Anspruch 6, wobei die Metadaten, die erzeugt werden, wenn die Metadatenanforderungsinformationen empfangen werden, Folgendes umfassen: Metadaten, die durch eine Netzseite spezifiziert sind, oder Metadaten, die gemäß einer Netzstrategie erzeugt werden, oder Metadaten, die gemäß einer anwenderdefinierten Bedingung erzeugt werden.

8. Verfahren zum Steuern des Abspielens von Medien nach Anspruch 1, wobei die Metadatenbereitstellungseinheit in einer Dienstauswahlfunktions-Einheit, SSF-Einheit, einer Anwenderprofilserverfunktions-Einheit, UPSF-Einheit, einer Medienfunktions-Einheit, MF-Einheit, einer Dienststeuerungsfunktions-Einheit, SCF-Einheit, oder einer elementaren Steuerfunktions-/elementaren Weiterleitungsfunktions-Einheit, ECF/EFF-Einheit, eingestellt ist.

9. Verfahren zum Steuern des Abspielens von Medien nach Anspruch 1, wobei die Medieninhaltssteuereinheit in einem Endgerät, einer Dienststeuerungsfunktions-Einheit, SCF-Einheit, einer Medienfunktions-Einheit, MF-Einheit, einer elementaren Steuerfunktions-/elementaren Weiterleitungsfunktions-Einheit, ECF/EFF-Einheit, eingestellt ist.

10. Metadatenausführungseinheit, die Folgendes umfasst:

ein Empfangsmodul (21), das konfiguriert ist, Triggerinformationen zum Ausführen von Metadaten zu empfangen und Metadaten von einer Metadatenbereitstellungseinheit zu erhalten;

ein Ausführungsmodul (22), das konfiguriert ist, entsprechende Metadaten gemäß den empfangenen Triggerinformationen zum Ausführen von Metadaten auszuführen; ein Erzeugungsmodul (23), das konfiguriert ist, Medieninhaltsteuerungsangabeinformationen gemäß einem Ausführungsergebnis der Ausführung der entsprechenden Metadaten zu erzeugen; und

ein Sendemodul (24), das konfiguriert ist, die Medieninhaltsteuerungsangabeinformationen zu einer Medieninhaltssteuereinheit (3) zu senden;

wobei die Metadatenausführungseinheit in einem Endgerät, einer Medienfunktions-Einheit, MF-Einheit, oder einer Dienststeuerungsfunktions-Einheit, SCF-Einheit, eingestellt ist.

11. System zum Steuern des Abspielens von Medien, das Folgendes umfasst:

eine Metadatenbereitstellungseinheit (1), die konfiguriert ist, Metadaten bereitzustellen;
eine Metadatenausführungseinheit (2), die konfiguriert ist, Triggerinformationen zum Ausführen von Metadaten zu empfangen, Metadaten von der Metadatenbereitstellungseinheit (1) zu erhalten, entsprechende Metadaten gemäß den Triggerinformationen auszuführen, Medieninhaltsteuerungsangabeinformationen gemäß einem Ausführungsergebnis zu erzeugen und die Medieninhaltsteuerungsangabeinformationen zu senden; und
eine Medieninhaltssteuereinheit (3), die konfiguriert ist, die durch die Metadatenausführungseinheit gesendeten Medieninhaltsteuerungsangabeinformationen zu empfangen und das Abspielen von Medieninhalt gemäß den Medieninhaltsteuerungsangabeinformationen zu steuern;
wobei die Metadatenausführungseinheit (2) in einem Endgerät, einer MF-Einheit oder einer SCF-Einheit eingestellt ist.

12. System zum Steuern des Abspielens von Medien nach Anspruch 11, wobei die Metadatenbereitstellungseinheit (1) in einer Dienstauswahlfunktions-Einheit, SSF-Einheit, einer Anwenderprofilserverfunktions-Einheit, UPSF-Einheit, einer Medienfunktions-Einheit, MF-Einheit, einer Dienststeuerungsfunktions-Einheit, SCF-Einheit, oder einer elementaren Steuerfunktions-/elementaren Weiterleitungsfunktions-Einheit, ECF/EFF-Einheit, eingestellt ist.

13. System zum Steuern des Abspielens von Medien nach Anspruch 11 oder 12, wobei die Medieninhaltssteuereinheit (3) in einem Endgerät, einer SCF-Einheit, einer MF-Einheit oder einer ECF/EFF-Einheit eingestellt ist.

14. System zum Steuern des Abspielens von Medien nach Anspruch 11, 12 oder 13, wobei die von der Metadatenbereitstellungseinheit erhaltenen Metadaten Folgendes umfassen: voreingestellte Metadaten oder Metadaten, die erzeugt werden, wenn die Metadatenanforderungsinformationen empfangen werden.

**Revendications**

1. Procédé de commande de la lecture de médias, comprenant :

la réception (201), par une unité d'exécution de métadonnées, d'informations de déclenchement pour l'exécution de métadonnées, l'obtention de métadonnées auprès d'une unité de fourniture de métadonnées, et l'exécution de métadonnées correspondantes conformément aux informations de déclenchement pour l'exécution de métadonnées ;
la génération (202), par l'unité d'exécution de métadonnées, d'informations d'indication de commande de contenu de médias conformément à un résultat d'exécution de l'exécution des métadonnées correspondantes ; et
l'envoi (203), par l'unité d'exécution de métadonnées, des informations d'indication de commande de contenu de médias à une unité de commande de contenu de médias afin de donner pour instruction à l'unité de commande de contenu de médias de commander la lecture de contenu de médias conformément aux informations d'indication de commande de contenu de médias ;
dans lequel l'unité d'exécution de métadonnées est placée dans un terminal, dans une unité de fonction de médias, MF, ou dans une unité de fonction de commande de services, SCF.

2. Procédé de commande de la lecture de médias selon la revendication 1, dans lequel la réception, par l'unité d'exécution de métadonnées, des informations de déclenchement pour l'exécution de métadonnées et l'obtention des métadonnées auprès de l'unité de fourniture de métadonnées comprennent : tout d'abord la réception des informations de déclenchement pour l'exécution de métadonnées, suivie de l'obtention des métadonnées ; ou bien tout d'abord l'obtention des métadonnées, suivie de la réception des informations de déclenchement pour l'exécution de métadonnées.

3. Procédé de commande de la lecture de médias selon la revendication 1 ou 2, dans lequel les informations de déclenchement pour l'exécution de métadonnées comprennent : des informations de déclenchement explicites indiquant de façon manifeste des métadonnées à obtenir ou bien des informations de déclenchement implicites n'indiquant pas de façon manifeste des métadonnées à obtenir.

**4.** Procédé de commande de la lecture de médias selon la revendication 3, dans lequel les informations de déclenchement explicites prennent la forme d'une demande d'invitation de visualisation, la réception (201), par une unité d'exécution de métadonnées, d'informations de déclenchement pour l'exécution de métadonnées comprend : la réception, par l'unité d'exécution de métadonnées, de la demande d'invitation de visualisation en provenance d'une fonction de terminal IPTV, ITF, dans lequel la demande d'invitation de visualisation contient une indication de prévisualisation et une ID du contenu à visualiser.

**5.** Procédé de commande de la lecture de médias selon la revendication 4, dans lequel l'indication de prévisualisation d'un contenu de programme est configurée pour indiquer qu'il convient d'exécuter en conséquence les métadonnées du segment de prévisualisation.

**6.** Procédé de commande de la lecture de médias selon la revendication 3, dans lequel les métadonnées obtenues par l'unité d'exécution de métadonnées auprès de l'unité de fourniture de métadonnées comprennent : des métadonnées prédéfinies dans l'unité de fourniture de métadonnées, ou bien des métadonnées générées par l'unité de fourniture de métadonnées au moment de la réception d'informations de demande de métadonnées.

**7.** Procédé de commande de la lecture de médias selon la revendication 6, dans lequel les métadonnées générées lors de la réception des informations de demande de métadonnées comprennent : des métadonnées spécifiées par un côté réseau, ou bien des métadonnées générées conformément à une politique de réseau, ou encore des métadonnées générées conformément d'une condition définie par un utilisateur.

**8.** Procédé de commande de la lecture de médias selon la revendication 1, dans lequel l'unité de fourniture de métadonnées est placée dans une unité de fonction de sélection de services, SSF, dans une unité de fonction de serveur de profils d'utilisateur, UPSF, dans une unité de fonction de médias, MF, dans une unité de fonction de commande de services, SCF, ou bien dans une unité de fonction de commande élémentaire/fonction de retransmission élémentaire, ECF/EFF.

**9.** Procédé de commande de la lecture de médias selon la revendication 1, dans lequel l'unité de commande de contenu de médias est placée dans un terminal, dans une unité de fonction de commande de services, SCF, dans une unité de fonction de médias, MF, ou bien dans une unité de fonction de commande élémentaire/fonction de retransmission élémentaire, ECF/EFF.

**10.** Unité d'exécution de métadonnées, comprenant :

un module de réception (21), configuré pour recevoir des informations de déclenchement pour l'exécution de métadonnées, et obtenir des métadonnées auprès d'une unité de fourniture de métadonnées ;
un module d'exécution (22), configuré pour exécuter des métadonnées correspondantes conformément aux informations de déclenchement reçues pour l'exécution de métadonnées ;
un module de génération (23), configuré pour générer des informations d'indication de commande de contenu de médias conformément à un résultat d'exécution de l'exécution des métadonnées correspondantes ; et
un module d'envoi (24), configuré pour envoyer les informations d'indication de commande de contenu de médias à une unité de commande de contenu de médias (3) ;
dans lequel l'unité d'exécution de métadonnées est placée dans un terminal, dans une unité de fonction de médias, MF, ou dans une unité de fonction de commande de services, SCF.

**11.** Système de commande de la lecture de médias, comprenant :

une unité de fourniture de métadonnées (1), configurée pour fournir des métadonnées ;
une unité d'exécution de métadonnées (2), configurée pour recevoir des informations de déclenchement pour l'exécution de métadonnées, obtenir des métadonnées auprès de l'unité de fourniture de métadonnées (1), exécuter des métadonnées correspondantes conformément aux informations de déclenchement, générer des informations d'indication de commande de contenu de médias conformément à un résultat d'exécution, et envoyer les informations d'indication de commande de contenu de médias ; et
une unité de commande de contenu de médias (3), configurée pour recevoir les informations d'indication de commande de contenu de médias envoyées par l'unité d'exécution de métadonnées, et commander la lecture de contenu de médias conformément aux informations d'indication de commande de contenu de médias ;
dans lequel l'unité d'exécution de métadonnées (2) est placée dans un terminal, dans une unité de MF ou dans une unité de SCF.

**12.** Système de commande de la lecture de médias selon la revendication 11, dans lequel l'unité de fourniture de métadonnées (1) est placée dans une unité de fonction de sélection de services, SSF, dans une unité de fonction de serveur de profils d'utilisateur, UPSF, dans une unité de fonction de médias, MF, dans une unité de fonction de commande de services, SCF, ou bien dans une unité de fonction de commande élémentaire/fonction de retransmission élémentaire, ECF/EFF.

**13.** Système de commande de la lecture de médias selon la revendication 11 ou 12, dans lequel l'unité de commande de contenu de médias (3) est placée dans un terminal, dans une unité de SCF, dans une unité de MF, ou bien dans une unité d'ECF/EFF.

**14.** Système de commande de la lecture de médias selon la revendication 11, 12 ou 13, dans lequel les métadonnées obtenues auprès de l'unité de fourniture de métadonnées comprennent : des métadonnées prédéfinies, ou bien des métadonnées générées au moment de la réception d'informations de demande de métadonnées.

**EP 2 273 756 B1**

| Metadata providing unit | —E1— | Metadata execution unit | —E2— | Media content control unit |
|---|---|---|---|---|

## FIG. 1

A metadata execution unit receives trigger information for executing metadata, obtains metadata from a metadata providing unit, and executes corresponding metadata according to the trigger information for executing metadata — 201

The metadata execution unit generates media content control indication information according to an execution result of the executing the corresponding metadata — 202

The metadata execution unit sends the media content control indication information to a media content control unit, to instruct the media content control unit to control media content playing according to the media content control indication information — 203

## FIG. 2

16

```
┌─────────────────────────────────────────────┐  301
│   A metadata execution unit obtains metadata │
│  from a metadata providing unit, and receives│
│  trigger information for executing metadata   │
└─────────────────────────────────────────────┘
                       │
                       ▼
┌─────────────────────────────────────────────┐  302
│   The metadata execution unit executes        │
│  corresponding metadata according to the      │
│  received trigger information for executing    │
│  metadata                                      │
└─────────────────────────────────────────────┘
                       │
                       ▼
┌─────────────────────────────────────────────┐  303
│   The metadata execution unit generates media │
│  content control indication information        │
│  according to an execution result of the       │
│  executing the corresponding metadata          │
└─────────────────────────────────────────────┘
                       │
                       ▼
┌─────────────────────────────────────────────┐  304
│   The metadata execution unit sends the media  │
│  content control indication information to a    │
│  media content control unit                     │
└─────────────────────────────────────────────┘
                       │
                       ▼
┌─────────────────────────────────────────────┐  305
│   The media content control unit plays         │
│  corresponding media content according to the  │
│  media content control indication information  │
└─────────────────────────────────────────────┘
```

FIG. 3

ITF | SCF | MF | SSF

401
Click a preview button

402
Send view invite request information

403
Authenticate and determine that a user has no right to watch a complete program

404
Obtain metadata of a preview segment of the VOD program

405
Execute the metadata, and generate media content control indication invite request information

406
Send the media content control indication invite request information

408
Confirmation (200 OK)

407
Confirmation (200 OK)

409
Establish media control and transmission channels

410
Initiate an RTSP play request

411
Confirmation (200 OK)

412
Control media content playing according to the media content control indication

413
Send the media content

FIG. 4

| ITF | SCF | MF | SSF |
|-----|-----|-----|-----|

**501**
Click a preview button

**502**
Send view invite request information carrying a preview indication

**503**
Obtain metadata of a preview policy

**504**
Execute the metadata, and generate a media content play control indication

**505**
Send media content play request information carrying the play control indication

**506**
The MF receives the request, and returns a 200 OK

**507**
Send a view invite request response

**508**
Establish media control and transmission channels

**509**
Initiate an RTSP play request

**510**
Confirmation (200 OK)

**511**
Control media content playing according to the media content play control indication

**512**
Send the media content

FIG. 5

| ITF | SCF | MF | SSF |
|---|---|---|---|

601
Click a preview button

602
Send view invite request information

603
Authenticate, and determine that a user has no right to watch a complete program

604
Obtain metadata of a preview segment of the VOD program

605
Forward view invite request information

606
Execute the metadata, and generate media content control indication information

607
Confirmation (200 OK)

607
Confirmation (200 OK)

608
Establish media control and transmission channels

609
Initiate an RTSP play request

610
Confirmation (200 OK)

611
Control media content playing according to the media content control indication

612
Send the media content

FIG. 6

FIG. 7

| ITF | SCF | MF | SSF |
|---|---|---|---|

**801** Obtain metadata of a preview segment of the VOD program

**802** Click a preview button

**803** Send view invite request information

**804** Send view invite request information

**805** Confirmation (200 OK)

**806** Confirmation (200 OK)

**807** Establish media control and transmission channels

**808** Determine that the user has a right to preview the VOD program, execute metadata of the preview segment, and generate a play request carrying media content control indication information

**809** Initiate an RTSP play request

**810** Confirmation (200 OK)

**811** Control media content playing according to the media content control indication

**812** Send the media content

FIG. 8

| ITF | ECF/EFF | SSF |
|---|---|---|

901
A terminal ITF obtains EPG information from a network SSF

902
Click to watch a broadcast channel BC 1

903
Execute a parental control metadata of the current BC 1 program, and generate media content control indication information

904
Send media content control indication information IGMP join

905
Control the media content according to the IGMP join, and send the media content to the ITF

906
Send the media content of the current BC 1 program

907
Execute a parental control metadata of a next BC 1 program, and generate media content control indication information

908
Send an IGMP leave

909
Control the media content, and stop sending the media content to the ITF

## FIG. 9

FIG. 10